# EUROPEAN PATENT SPECIFICATION

(11) **EP 3 265 706 B1**
(45) Date of publication and mention of the grant of the patent: **05.08.2020**
(21) Application number: 16761141.7
(22) Date of filing: 02.03.2016
(51) Int. Cl.: F16K 17/36, F16K 1/16, F24F 13/15, F16L 55/027, F16L 55/10, F16K 1/20, F16K 17/32, F24F 11/74, F24F 13/14

(54) **A PRESSURE VALVE AND METHOD OF ADJUSTING A PRESSURE VALVE**
DRUCKVENTIL UND VERFAHREN ZUR HERSTELLUNG EINES DRUCKVENTILS
SOUPAPE DE SÉCURITÉ ET PROCÉDÉ DE RÉGLAGE D'UNE SOUPAPE DE SÉCURITÉ

(30) Priority: 06.03.2015 FI 20155148
(43) Date of publication of application: 10.01.2018
(73) Proprietor: Temet OY, 00880 Helsinki (FI)
(72) Inventor: KARKKULAINEN, Timo, 00880 Helsinki (FI)
(74) Representative: Boco IP Oy Ab
(86) International application number: PCT/FI2016/050129
(87) International publication number: WO 2016/142577

(56) References cited:
- EP-A1- 2 297 526
- EP-A1- 2 297 527
- WO-A1-2007/141574
- WO-A1-2009/136006
- US-A- 3 059 565
- US-A- 3 662 670
- US-A1- 2004 121 722

## Description

### FIELD OF THE INVENTION

The invention relates to a pressure valve and especially to a pressure valve in accordance with the preamble of claim 1. The invention further relates to a method of adjusting a pressure valve and especially to a method of adjusting a pressure valve in accordance with the preamble of claim 7. In this application a pressure valve means the same as a blast damper.

### BACKGROUND OF THE INVENTION

In petrochemical plants, oil-drilling rigs, process industry plants and other corresponding plants, it is necessary to safeguard against sudden and high pressure loads caused by explosions, sudden fires, or the like. Ventilation systems are safeguarded against such pressure loads by installing in them pressure valves or blast dampers that close automatically when a pressure load of the above-mentioned type is directed to them. Pressure valves of this type may also be installed at a desired location in a ventilation shaft or directly inside or outside a pressure load-resistant wall in connection with a ventilation shaft. Prior art pressure valves comprise plate-like closing blades arranged on turning axles. Normally, there are two or more axles in a pressure valve and they extend parallel at a distance from each other across a flow channel formed by the pressure valve, through which air or some other flowing medium flows through the pressure valve. One or more closing blades may be installed next to each other on one axle. In a normal operating mode, the closing blades are in an open position that allows air or some other flowing medium to flow through the closing blades and the pressure valve. Thus, in the open position, the closing blades are set in the flow direction of the air flowing through the pressure valve or at an angle relative to the flow direction. A prior art pressure valve also comprises a prestressing mechanism that prestresses the closing blades to or retains them in an open position by means of a predefined threshold force and triggers the closing blades to turn into a closed position when a pressure load or a force generated by pressure or the flow rate exceeds a predefined threshold force. The closing blades are designed and set to be capable of receiving a pressure load for triggering the prestressing means to close the closing blades. In other words, the closing blades are formed and installed in the open position in such a manner that the pressure load is directed against the surface of the closing blades. The prestressing means then pull the closing blades into the closed position in which flow through the valve is essentially prevented. Thus, in the closed position, the closing blades are essentially transverse to the air flow direction through the pressure valve and close the through-flow cross-sectional area of the pressure valve. EP 2 297 526 discloses a pressure valve upon which the preamble of appending claim 1 is based.

A problem with the prior art pressure valve is that the closing blades may be arranged in such a position that the flow through the pressure valve is too small which means that the flow resistance of the closing blades is too much. In a prior art pressure valve the prestressing mechanism is set to close the blades when a predetermined threshold force is exceeded so the blade angle of the closing blades cannot be changed without affecting to the prestressing mechanism.

### BRIEF DESCRIPTION OF THE INVENTION

An object of the present invention is to provide a pressure valve and a method of adjusting a pressure valve so as to alleviate the above disadvantages. The objects of the invention are achieved by a pressure valve and a method of adjusting a pressure valve which are characterized by what is stated in the independent claims. The preferred embodiments of the invention are disclosed in the dependent claims.

A pressure valve according to the invention comprises a body forming a flow channel through the pressure valve, closing blades arranged to be turned between a closed position, in which the closing blades are essentially transverse to the flow channel of the pressure valve essentially preventing flow through the pressure valve, and an open position, in which the closing blades are at an angle to the flow channel of the pressure valve or essentially parallel to the flow channel allowing flow through the pressure valve and prestressing means for prestressing the closing blades into the open position and for triggering them to turn into the closed position in response to a pressure increase in the flow channel of the pressure valve. The prestressing means are operationally connected to the closing blades for turning the closing blades into the closed position in response to a trigger from the pressure increase in the flow channel.

The invention is based on the idea that a pressure valve further comprises a closing blade adjustment mechanism arranged to adjust alignment of the closing blades for changing flow through the pressure valve and a prestressing means adjustment mechanism arranged to change stress of the prestressing means for adjusting triggering sensitivity. The closing blade adjustment mechanism and the prestressing means adjustment mechanism are together arranged to adjust the triggering sensitivity relative to flow through the pressure valve defined by the alignment of the closing blades. In the method in which the pressure valve according to the invention is used the method of adjusting a pressure valve according to the invention comprises the step of adjusting the alignment of the closing blades for changing the flow through the pressure valve. In another embodiment of the invention the method further comprises a step of adjusting the prestressing means for changing the response for triggering the closing blades to turn into the closed position. In an embodiment of the invention the step of adjusting the blade angle and the step of adjusting the prestressing means are carried out independently. In another embodiment of the invention the step of adjusting the blade angle and the step of adjusting the prestressing means are carried out simultaneously.

According to the invention the closing blade adjustment mechanism and the prestressing means adjustment mechanism can be operated independently.

An advantage of the pressure valve and the method of adjusting the pressure valve according to the invention is that when the need for further ventilation appears the flow through the pressure valve can be adjusted. Another advantage is that when already having an installed pressure valve in the building and need for a sand trap or other extra equipment appears, that changes the ventilation properties and also changes the threshold force for triggering the closing blades, the prestressing means can be adjusted for meeting the new need.

In this application a pressure valve means the same as a blast damper.

### BRIEF DESCRIPTION OF THE DRAWINGS

In the following the invention will be described in greater detail by means of preferred embodiments with reference to the accompanying drawings, in which
Figure 1 shows a pressure valve according to the invention from the inside; and
Figure 2 shows the pressure valve shown in figure 1 from the outside.

### DETAILED DESCRIPTION OF THE INVENTION

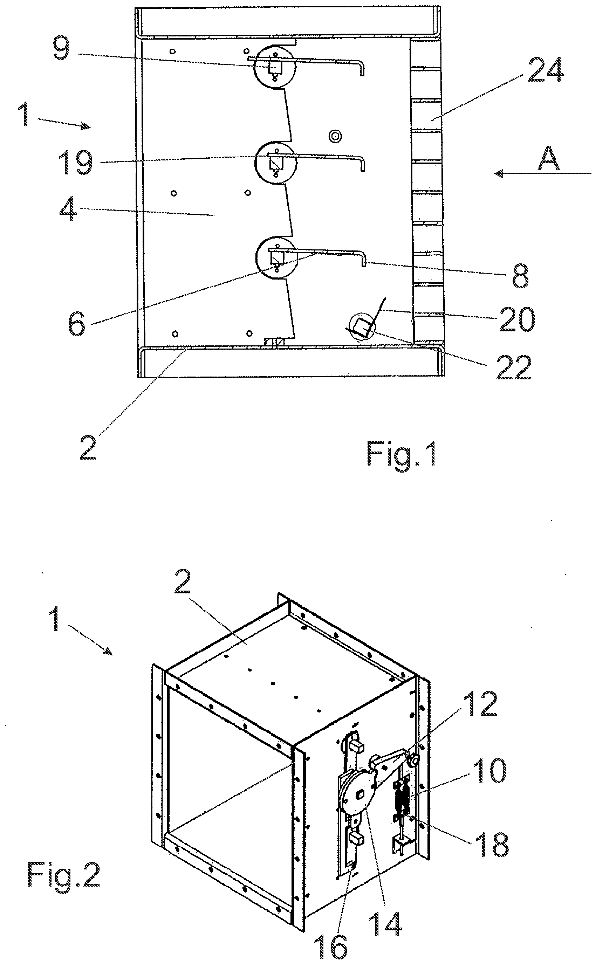

Figure 1 shows a pressure valve 1 that comprises a body 2 with openings on its opposite sides, whereby a flow channel 4 is formed through the pressure valve 1 in the direction of arrow A, along which air or some other flowing medium may flow through the pressure valve. In the normal flow direction (arrow A), the pressure valve 1 is furnished at its front or at the front end of the flow channel 4 with a protecting screen 24 that controls air flow inside the pressure valve 1 and the flow channel 4 and prevents solid items or pieces entering the pressure valve. In other words the pressure valve 1 comprises a protecting screen 24 installed upstream of the closing blades 6 to control air flow to the flow channel 4 of the pressure valve 1 and to prevent solid pieces from entering the pressure valve 1. Inside the pressure valve 1, closing blades 6 are installed on axles 9 that extend parallel and at a distance from each other across the flow channel 4. One axle 9 may have one or more closing blades 6 next to each other, and in one embodiment of the pressure valve 1 there may be two or more adjacent axles 9. The axles 9 are mounted rotatably or with bearings on the body 2 in such a manner that they are capable of turning relative to the body 2. The closing blades 6 are preferably plate-like pieces that are turnable between an open position, in which flow is allowed through the pressure valve 1, and a closed position, in which flow is prevented through the pressure valve 1. In their open position the closing blades 6 are essentially parallel to the flow channel 4 and/or flow direction A, or alternatively at an angle to the flow channel 4 or flow direction A of the pressure valve 1, and thus allow flow through the pressure valve 1. In the open position, closing blades 6 mounted on adjacent axles 9 have a clearance between them, through which flow is allowed. In their open position, the closing blades 6 are preferably set as parallel as possible to the flow channel 4 and/or flow direction A so that the flow resistance caused by the closing blades 6 in the pressure valve 1 is as small as possible. In their closed position, the closing blades 6 are turned essentially transverse to the flow channel 4 and/or flow direction A of the pressure valve 1 in such a manner that they essentially close the flow channel and essentially prevent flow through the pressure valve 1. In their closed position, the closing blades 6 are preferably perpendicular to the longitudinal direction of the flow channel 4 and/or the flow direction A, whereby they effectively close the pressure valve 1. The closing blades 6 are turned from the open position to the closed position by turning the axles 9 in such a manner that the closing blades 6 turn downward to a transverse position to the flow direction A and flow channel 4. The closing blades 6 are preferably dimensioned in such a manner that in the closed position, the leading edge 8 of the closing blade 6 settles against the trailing edge 19 of the closing blade 6 on the adjacent axle or in its immediate vicinity to seal the flow channel 4. Correspondingly, in the closed position, the leading and trailing edges 8, 19 of the closing blades 6 adjacent to the body 2 settle against the body 2 or in its immediate vicinity.

Figure 2 shows that the pressure valve 1 further comprises a closing blade adjustment mechanism 16 arranged to adjust alignment of the closing blades 6 for changing flow through the pressure valve 1. The closing blade adjustment mechanism 16 is arranged to change the position of the closing blades 6 in the flow channel 4 for adjusting the ventilation through the pressure valve 1. The axles 9 are connected to each other with the closing blade adjustment mechanism 16 such that the closing blades 6 turn simultaneously together. In the normal operating position, the closing blades 6 are in the open position, in which the flowing medium is allowed to flow between the closing blades 6 through the pressure valve 1 in flow direction A.

The pressure valve is also furnished with prestressing means 10, 12, 14 that prestress the closing blades 6 into the open position and trigger them to turn to the closed position in response to a pressure increase in the flow channel 4 of the pressure valve. The prestressing means 10, 12, 14 are further operationally connected to the closing blade adjustment mechanism 16 for turning the axles 9 simultaneously and thus also for turning the closing blades 6 simultaneously to the closed position. The prestressing means 10, 12, 14 comprise a spring 10 that, when the closing blades 6 are in the open position and prestressed mode, is ready to trigger the pressure valve into the closed mode by turning the closing blades 6 into the closed position. The spring 10 is restrained in the prestressed mode through a cam wheel 14 connected operationally to the closing blade adjustment mechanism 16 and its counterpart 12. Thus, when pressure exceeds the threshold value set by the prestressing means 10, 12, 14, the cam wheel 14 turns and the spring 10 is released from its prestressed mode, whereby it turns the closing blades 6 into the closed position. In other words the prestressing means 10, 12, 14 comprise a spring 10 for prestressing the closing blades 6 into the open position and for triggering them to turn into the closed position in response to a pressure increase in the flow channel 4 of the pressure valve. The closing blade adjustment mechanism 16, axles 9, closing blades 6, and prestressing means 10, 12, 14 are designed and implemented in such a manner that when the pressure valve is triggered and the closing blades 6 turn into the closed position, the closing blades 6 also lock into this closed position. Thus, the pressure valve is preferably furnished with a manual opening mechanism, by means of which the closing blades 6 may, when necessary, be turned manually back into the open position, whereby the prestressing means 10, 12, 14 also prestress for a re-closing of the pressure valve. An angle of the closing blades 6 relative to the flow channel 4 can be adjusted through the closing blade adjustment mechanism 16 by changing the position of the closing blade adjustment mechanism 16. Change in the position of the closing blade adjustment mechanism 16 changes the alignment of the closing blades 6 arranged in the axles 9. The alignment of the closing blades 6 can be changed for reducing the flow through the flow channel 4 such that the closing blades 6 are turned so that the leading edge 8 of the closing blade 6 faces more toward the bottom of the flow channel 4. In other words, the closing blade 6 is turned such that the leading edge 8 is arranged to be closer to the trailing edge 19 of the closing blade 6 on the adjacent axle 9 or closer to the bottom of the flow channel 4. The closing blade adjustment mechanism 16 can also change the alignment of the closing blades 6 to reverse direction such that the flow through the flow channel 4 is enhanced in which case the leading edge 8 of the closing blade 6 is turned away from the trailing edge 19 of the closing blade 6 on the adjacent axle 9 or from the bottom of the flow channel 4.

Figure 2 shows also a prestressing means adjustment mechanism 18 which is arranged to change stress of the prestressing means 10, 12, 14 for adjusting triggering sensitivity. When the closing blades 6 are in the open position, they are preferably set essentially parallel or nearly parallel to flow direction A and/or the flow channel 4, whereby they create as small flow resistance as possible during the open mode of the pressure valve 1. However, this also means that the surface area of the closing blades 6 that meets or receives the pressure or flow through the pressure valve 1 in the direction of the flow channel 4 or in flow direction A becomes smaller. Conventionally, this is the reason why the closing blades 6 could not be set essentially parallel to the flow channel 4 and/or flow direction A in the open position, because the position of the closing blades 6 define the threshold pressure or threshold force that when meeting the closing blades 6 makes the prestressing means 10, 12, 14 trigger the turning of the closing blades 6 into the closed position. Conventionally, the flow resistance could not therefore be minimised by turning the closing blades 6 as close as possible to flow direction A or the direction of the flow channel 4, but in the open position of the closing blades their surfaces had to be partially against the flow through the pressure valve so that they could receive a pressure load to trigger the pressure valve into the closed position. The prestressing means adjustment mechanism 18 is arranged to adjust the sensitivity of the prestressing means 10, 12, 14 such that the prestressing means 10, 12, 14 can be arranged to trigger the closing blade 6 to turn into the closed position in response to a pressure increase in the flow channel 4 of the pressure valve 1 more easily, i.e. with a smaller pressure increase in the flow channel 4 or the prestressing means adjustment mechanism 18 can adjust the prestressing means 10, 12, 14 to trigger the closing blades 6 to turn into closed position in response to a greater pressure increase in the flow channel 4.

The closing blade adjustment mechanism 16 and the prestressing means adjustment mechanism 18 can be together arranged to adjust the triggering sensitivity relative to flow through the pressure valve 1 defined by the alignment of the closing blades 6.

Figure 1 also shows an embodiment of the pressure valve 1 which has a separate trigger 22 that is operationally connected to the prestressing means 10, 12, 14 shown in figure 2. The trigger 22 is arranged to trigger the turning of the closing blades 6 into the closed position under the effect of pressure or a force or flow generated by pressure. In other word the separate trigger 22 is operationally connected to the prestressing means 10, 12, 14 to trigger the closing blades 6 to turn into the closed position in response to a pressure increase in the flow channel 4 of the pressure valve 1. The trigger 22 preferably comprises a receiving member 20, for instance a plate-like part, for receiving pressure or force or flow generated by pressure, which is arranged to turn or move under the pressure or force or flow generated by pressure to trigger the closing blades 6 to turn into the closed position. In other words, the trigger 20, 22 is connected to the prestressing means 10, 12, 14 in such a manner that when encountering a load exceeding a threshold pressure, threshold force, or threshold flow, the trigger 20, 22 releases the prestressing means 10, 12, 14 that then turn the closing blades 6 into the closed position.

In a preferred embodiment of the invention the pressure valve 1 also comprises a sand trap for removing sand from the airflow before reaching the pressure valve 1.

It will be obvious to a person skilled in the art that, as the technology advances, the inventive concept can be implemented in various ways. The invention and its embodiments are not limited to the examples described above but may vary within the scope of the claims.

## Claims

1. A pressure valve (1) comprising:
a body (2) forming a flow channel (4) through the pressure valve (1);
closing blades (6) arranged to be turned between a closed position, in which the closing blades (6) are essentially transverse to the flow channel (4) of the pressure valve (1) essentially preventing flow through the pressure valve (1), and an open position, in which the closing blades (6) are at an angle to the flow channel (4) of the pressure valve (1) or essentially parallel to the flow channel (4) allowing flow through the pressure valve (1); and
prestressing means (10, 12, 14) for prestressing the closing blades (6) into the open position and for triggering them to turn into the closed position in response to a pressure increase in the flow channel (4) of the pressure valve (1), the prestressing means (10, 12, 14) are operationally connected to the closing blades (6) for turning the closing blades (6) into the closed position in response to a trigger from the pressure increase in the flow channel (4);
the pressure valve (1) **characterized in** comprising a closing blade adjustment mechanism (16) arranged to adjust alignment of the closing blades (6) for changing flow through the pressure valve (1); and
a prestressing means adjustment mechanism (18) arranged to change stress of the prestressing means (10, 12, 14) for adjusting triggering sensitivity;
the closing blade adjustment mechanism (16) and the prestressing means adjustment mechanism (18) being together arranged to adjust the triggering sensitivity relative to flow through the pressure valve (1) defined by the alignment of the closing blades (6).

2. A pressure valve (1) according to claim 1, **characterized in that** the closing blade adjustment mechanism (16) and the prestressing means adjustment mechanism (18) can be operated independently.

3. A pressure valve (1) according to claim 1 or 2, **characterized in that** the pressure valve (1) also comprises a protecting screen (24) installed upstream of the closing blades (6) to control air flow to the flow channel (4) of the pressure valve (1) and to prevent solid pieces from entering the pressure valve (1).

4. A pressure valve (1) according to any previous claim, **characterized in that** the pressure valve (1) also comprises a sand trap for removing sand from the air flow before reaching the pressure valve (1).

5. A pressure valve (1) according to any previous claim, **characterized in that** the pressure valve (1) further comprising a separate trigger (20, 22) operationally connected to the prestressing means (10, 12, 14) to trigger the closing blades (6) to turn into the closed position in response to a pressure increase in the flow channel (4) of the pressure valve (1).

6. A pressure valve (1) according to any previous claim, **characterized in that** the prestressing means (10, 12, 14) comprise a spring (10) for prestressing the closing blades (6) into the open position and for triggering them to turn into the closed position in response to a pressure increase in the flow channel (4) of the pressure valve.

7. Method of adjusting a pressure valve (1), the pressure valve (1) comprising:
a body (2) forming a flow channel (4) through the pressure valve (1);
closing blades (6) arranged to be turned between a closed position, in which the closing blades (6) are essentially transverse to the flow channel (4) of the pressure valve (1) essentially preventing flow through the pressure valve (1), and an open position, in which the closing blades (6) are at an angle to the flow channel (4) of the pressure valve (1) or essentially parallel to the flow channel (4) allowing flow through the pressure valve (1); and
prestressing means (10, 12, 14) for prestressing the closing blades (6) into the open position and for triggering them to turn into the closed position in response to a pressure increase in the flow channel (4) of the pressure valve (1), the prestressing means (10, 12, 14) are operationally connected to the closing blades (6) for turning the closing blades (6) into the closed position in response to a trigger from the pressure increase in the flow channel (4);
the pressure valve (1) **characterized in** comprising a closing blade adjustment mechanism arranged to adjust alignment of the closing blades (6) for changing flow through the pressure valve (1); and
a prestressing means adjustment mechanism arranged to change stress of the prestressing means (10, 12, 14) for adjusting triggering sensitivity;
the closing blade adjustment mechanism and the prestressing means adjustment mechanism being together arranged to adjust the triggering sensitivity relative to flow through the pressure valve (1) defined by the alignment of the closing blades (6);
the method comprises the step of:
adjusting the alignment of the closing blades (6) for changing the flow through the pressure valve (1).

8. Method according to claim 7, **characterized in that** the method further comprises the step of:
adjusting the prestressing means (10, 12, 14) for changing the response for triggering the closing blades (6) to turn into the closed position.

9. Method according to claim 8, **characterized in that** the step of adjusting the blade angle (α) and the step of adjusting the prestressing means (10, 12, 14) are carried out independently.

10. Method according to claim 8, **characterized in that** the step of adjusting the blade angle (α) and the step of adjusting the prestressing means (10, 12, 14) are carried out simultaneously.

## Patentansprüche

1. Druckventil (1) umfassend:
ein Gehäuse (2), das einen Strömungskanal (4) durch das Druckventil (1) hindurch ausbildet;
Verschlusslamellen (6), die so eingerichtet sind, dass sie zwischen einer geschlossenen Stellung, in der die Verschlusslamellen (6) im Wesentlichen quer zum Strömungskanal (4) des Druckventils (1) stehen und die Durchströmung des Druckventils (1) im Wesentlichen verhindern, und einer offenen Stellung, in der die Verschlusslamellen (6) winklig zum Strömungskanal (4) des Druckventils (1) oder im Wesentlichen parallel zum Strömungskanal (4) stehen und die Durchströmung des Druckventils (1) gestatten, gedreht werden; und
Vorspannmittel (10, 12, 14), um die Verschlusslamellen (6) in die offene Stellung vorzuspannen und um auszulösen, dass sich diese in Reaktion auf eine Druckerhöhung im Strömungskanal (4) des Druckventils (1) in die geschlossene Stellung drehen, wobei die Vorspannmittel (10, 12, 14) mit den Verschlusslamellen (6) betriebswirksam verbunden sind, um die Verschlusslamellen (6), in Reaktion auf einen Auslöser durch die Druckerhöhung im Strömungskanal (4), in die geschlossene Stellung zu drehen,
wobei das Druckventil (1) **dadurch gekennzeichnet ist, dass** es umfasst:
einen Verschlusslamellenreguliermechanismus (16), der dazu eingerichtet ist, die Ausrichtung der Verschlusslamellen (6) zu regulieren, um die durch das Druckventil (1) strömende Durchflussmenge zu verändern; und
einen Vorspannmittelreguliermechanismus (18), der dazu eingerichtet ist, die Spannung der Vorspannmittel (10, 12, 14) zu verändern, um die Auslöseempfindlichkeit zu regulieren;
wobei der Verschlusslamellenreguliermechanismus (16) und der Vorspannmittelreguliermechanismus (18) zusammen dazu eingerichtet sind, die Auslöseempfindlichkeit gegenüber der durch die Ausrichtung der Verschlusslamellen (6) definierten Durchflussmenge des Druckventils (1) zu regulieren.

2. Druckventil (1) nach Anspruch 1, **dadurch gekennzeichnet, dass** der Verschlusslamellenreguliermechanismus (16) und der Vorspannmittelreguliermechanismus (18) unabhängig betrieben werden können.

3. Druckventil (1) nach Anspruch 1 oder 2, **dadurch gekennzeichnet, dass** das Druckventil (1) auch ein den Verschlusslamellen (6) anströmseitig vorgeschaltetes Schutzgitter (24) umfasst, um die Luftströmung zum Strömungskanal (4) des Druckventils (1) zu regeln und das Druckventil (1) vor dem Eindringen von Festkörpern zu schützen.

4. Druckventil (1) nach einem beliebigen vorherigen Anspruch, **dadurch gekennzeichnet, dass** das Druckventil (1) auch einen Sandfänger umfasst, um Sand aus dem Luftstrom zu entfernen, bevor dieser das Druckventil (1) erreicht.

5. Druckventil (1) nach einem beliebigen vorherigen Anspruch, **dadurch gekennzeichnet, dass** das Druckventil (1) ferner ein separates Auslöserelement (20, 22) umfasst, das mit den Vorspannmitteln (10, 12, 14) betriebswirksam verbunden ist, um auszulösen, dass sich die Verschlusslamellen (6) in Reaktion auf eine Druckerhöhung im Strömungskanal (4) des Druckventils (1) in die geschlossene Stellung drehen.

6. Druckventil (1) nach einem beliebigen vorherigen Anspruch, **dadurch gekennzeichnet, dass** die Vorspannmittel (10, 12, 14) eine Feder (10) umfassen, um die Verschlusslamellen (6) in die offene Stellung vorzuspannen und um auszulösen, dass sich diese in Reaktion auf eine Druckerhöhung im Strömungskanal (4) des Druckventils in die geschlossene Stellung drehen.

7. Verfahren zur Regulierung eines Druckventils (1), wobei das Druckventil (1) umfasst:
ein Gehäuse (2), das einen Strömungskanal (4) durch das Druckventil (1) hindurch ausbildet;
Verschlusslamellen (6), die so eingerichtet sind, dass sie zwischen einer geschlossenen Stellung, in der die Verschlusslamellen (6) im Wesentlichen quer zum Strömungskanal (4) des Druckventils (1) stehen und die Durchströmung des Druckventils (1) im Wesentlichen verhindern, und einer offenen Stellung, in der die Verschlusslamellen (6) winklig zum Strömungskanal (4) des Druckventils (1) oder im Wesentlichen parallel zum Strömungskanal (4) stehen und die Durchströmung des Druckventils (1) gestatten, gedreht werden; und
Vorspannmittel (10, 12, 14), um die Verschlusslamellen (6) in die offene Stellung vorzuspannen und um auszulösen, dass sich diese in Reaktion auf eine Druckerhöhung im Strömungskanal (4) des Druckventils (1) in die geschlossene Stellung drehen, wobei die Vorspannmittel (10, 12, 14) mit den Verschlusslamellen (6) betriebswirksam verbunden sind, um die Verschlusslamellen (6), in Reaktion auf einen Auslöser durch die Druckerhöhung im Strömungskanal (4), in die geschlossene Stellung zu drehen,
wobei das Druckventil (1) **dadurch gekennzeichnet ist, dass** es umfasst:
einen Verschlusslamellenreguliermechanismus, der dazu eingerichtet ist, die Ausrichtung der Verschlusslamellen (6) zu regulieren, um die durch das Druckventil (1) strömende Durchflussmenge zu verändern; und
einen Vorspannmittelreguliermechanismus, der dazu eingerichtet ist, die Spannung der Vorspannmittel (10, 12, 14) zu verändern, um die Auslöseempfindlichkeit zu regulieren;
wobei der Verschlusslamellenreguliermechanismus und der
Vorspannmittelreguliermechanismus zusammen dazu eingerichtet sind, die Auslöseempfindlichkeit gegenüber der durch die Ausrichtung der Verschlusslamellen (6) definierten Durchflussmenge des Druckventils (1) zu regulieren;
wobei das Verfahren den Schritt umfasst:
Regulieren der Ausrichtung der Verschlusslamellen (6), um die durch das Druckventil (1) strömende Durchflussmenge zu verändern.

8. Verfahren nach Anspruch 7, **dadurch gekennzeichnet, dass** das Verfahren ferner den Schritt umfasst:
Regulieren der Vorspannmittel (10, 12, 14) zum Verändern der Reaktion zur Auslösung der Drehung der Verschlusslamellen (6) in die geschlossene Stellung.

9. Verfahren nach Anspruch 8, **dadurch gekennzeichnet, dass** der Schritt der Regulierung des Lamellenwinkels (α) und der Schritt der Regulierung der Vorspannmittel (10, 12, 14) unabhängig ausgeführt werden.

10. Verfahren nach Anspruch 8, **dadurch gekennzeichnet, dass** der Schritt der Regulierung des Lamellenwinkels (α) und der Schritt der Regulierung der Vorspannmittel (10, 12, 14) gleichzeitig ausgeführt werden.

## Revendications

1. Soupape de pression (1) comprenant :
un corps (2) formant un canal de passage (4) au travers de la soupape de pression (1) ;
des lames de fermeture (6) agencées pour être tournées entre une position fermée, dans laquelle les lames de fermeture (6) sont essentiellement transversales au canal de passage (4) de la soupape de pression (1) en empêchant essentiellement le débit au travers de la soupape de pression (1), et une position ouverte, dans laquelle les lames de fermeture (6) présentent un angle par rapport au canal de passage (4) de la soupape de pression (1) ou sont essentiellement parallèles au canal de passage (4) en autorisant le débit au travers de la soupape de pression (1) ; et
des moyens de précontrainte (10, 12, 14) pour précontraindre les lames de fermeture (6) en position ouverte et déclencher leur rotation vers la position fermée en réponse à une augmentation de pression dans le canal de passage (4) de la soupape de pression (1), lesdits moyens de précontrainte (10, 12, 14) étant opérationnellement reliés aux lames de fermeture (6) pour tourner les lames de fermeture (6) vers la position fermée en réponse à un déclenchement dû à l'augmentation de pression dans le canal de passage (4),
ladite soupape de pression (1) étant **caractérisée en ce qu'**elle comprend
un mécanisme de réglage de lame de fermeture (16) agencé pour régler l'alignement des lames de fermeture (6) afin de varier le débit au travers de la soupape de pression (1) ; et
un mécanisme de réglage de moyen de précontrainte (18) agencé pour varier la tension des moyens de précontrainte (10, 12, 14) afin de régler la sensibilité de déclenchement ;
ledit mécanisme de réglage de lame de fermeture (16) et ledit mécanisme de réglage de moyen de précontrainte (18) étant agencés ensemble pour régler la sensibilité de déclenchement par rapport au débit au travers de la soupape de pression (1) défini par l'alignement des lames de fermeture (6).

2. Soupape de pression (1) selon la revendication 1, **caractérisée en ce que** le mécanisme de réglage de lame de fermeture (16) et le mécanisme de réglage de moyen de précontrainte (18) peuvent fonctionner de manière indépendante.

3. Soupape de pression (1) selon la revendication 1 ou 2, **caractérisée en ce que** la soupape de pression (1) comprend également une grille de protection (24) montée en amont des lames de fermeture (6) pour contrôler le débit d'air vers le canal de passage (4) de la soupape de pression (1) et pour empêcher des pièces solides d'entrer dans la soupape de pression (1).

4. Soupape de pression (1) selon une quelconque revendication précédente, **caractérisée en ce que** la soupape de pression (1) comprend également un dessableur (3) pour extraire le sable du flux d'air avant que celui-ci atteigne la soupape de pression (1).

5. Soupape de pression (1) selon une quelconque revendication précédente, **caractérisée en ce que** la soupape de pression (1) comprend également un déclencheur séparé (20, 22) opérationnellement relié aux moyens de précontrainte (10, 12, 14) pour déclencher la rotation des lames de fermeture (6) vers la position fermée en réponse à une augmentation de pression dans le canal de passage (4) de la soupape de pression (1).

6. Soupape de pression (1) selon une quelconque revendication précédente, **caractérisée en ce que** les moyens de précontrainte (10, 12, 14) comprennent un ressort (10) pour précontraindre les lames de fermeture (6) en position ouverte et pour déclencher leur rotation vers la position fermée en réponse à une augmentation de pression dans le canal de passage (4) de la soupape de pression.

7. Procédé de réglage d'une soupape de pression (1) dans lequel la soupape de pression (1) comprend :
un corps (2) formant un canal de passage (4) au travers de la soupape de pression (1) ;
des lames de fermeture (6) agencées pour être tournées entre une position fermée, dans laquelle les lames de fermeture (6) sont essentiellement transversales au canal de passage (4) de la soupape de pression (1) en empêchant essentiellement le débit au travers de la soupape de pression (1), et une position ouverte, dans laquelle les lames de fermeture (6) présentent un angle par rapport au canal de passage (4) de la soupape de pression (1) ou sont essentiellement parallèles au canal de passage (4) en autorisant le débit au travers de la soupape de pression (1) ; et
des moyens de précontrainte (10, 12, 14) pour précontraindre les lames de fermeture (6) en position ouverte et déclencher leur rotation vers la position fermée en réponse à une augmentation de pression dans le canal de passage (4) de la soupape de pression (1), lesdits moyens de précontrainte (10, 12, 14) étant opérationnellement reliés aux lames de fermeture (6) pour tourner les lames de fermeture (6) vers la position fermée en réponse à un déclenchement dû à l'augmentation de pression dans le canal de passage (4),
ladite soupape de pression (1) étant **caractérisée en ce qu'**elle comprend
un mécanisme de réglage de lame de fermeture agencé pour régler l'alignement des lames de fermeture (6) afin de varier le débit au travers de la soupape de pression (1) ; et
un mécanisme de réglage de moyen de précontrainte agencé pour varier la tension des moyens de précontrainte (10, 12, 14) afin de régler la sensibilité de déclenchement ;
ledit mécanisme de réglage de lame de fermeture et ledit mécanisme de réglage de moyen de précontrainte étant agencés ensemble pour régler la sensibilité de déclenchement par rapport au débit au travers de la soupape de pression (1) défini par l'alignement des lames de fermeture (6) ;
ledit procédé comprenant l'étape consistant à :
régler l'alignement des lames de fermeture (6) afin de varier le débit au travers de la soupape de pression (1).

8. Procédé selon la revendication 7, **caractérisé en ce que** le procédé comprend également l'étape consistant à :
régler les moyens de précontrainte (10, 12, 14) afin de varier la réponse pour le déclenchement de la rotation des lames de fermeture (6) vers la position fermée.

9. Procédé selon la revendication 8, **caractérisé en ce que** l'étape de réglage de l'angle de lame (α) et l'étape de réglage des moyens de précontrainte (10, 12, 14) sont effectuées de manière indépendante.

10. Procédé selon la revendication 8, **caractérisé en ce que** l'étape de réglage de l'angle de lame (α) et l'étape de réglage des moyens de précontrainte (10, 12, 14) sont effectuées de manière simultanée.
